# EUROPEAN PATENT SPECIFICATION

(11) **EP 1 677 580 B1**
(45) Date of publication and mention of the grant of the patent: **28.11.2007**
(21) Application number: 05254422.8
(22) Date of filing: 14.07.2005
(51) Int. Cl.: H05B 6/80

(54) **Cooking control method of microwave oven and apparatus for performing the same**
Kochsteuerverfahren für Mikrowellenofen und Gerät zur Durchführung des Verfahrens
Procédé de commande de cuisson pour four à micro-ondes et appareil pour sa mise en oeuvre

(30) Priority: 03.01.2005 KR 2005000291
(43) Date of publication of application: 05.07.2006
(73) Proprietor: SAMSUNG ELECTRONICS CO., LTD., Suwon-si, Gyeonggi-do (KR)
(72) Inventor: Jung, Jin Hee, Seoul (KR)
(74) Representative: Robinson, Ian Michael

(56) References cited:
- EP-A- 0 552 807
- EP-A- 1 477 782
- EP-A- 1 487 241
- US-A- 5 302 792
- US-A- 5 422 464
- US-A- 5 463 207

## Description

The present invention relates to a microwave oven having a weight sensor, and more particularly to a method for controlling the microwave output depending upon a weight of food to be cooked so as to implement optimized cooking performance in a microwave oven and an apparatus for performing the same.

Generally, a microwave oven is a cooking device for rapidly heating food using microwaves at a frequency of about 2,450 MHz, which are generated when high voltage electricity is applied to a magnetron, a device for generating high frequency microwaves, and vibrate water molecules contained in food, so that the food is rapidly cooked by heat generated due to the vibration of the water molecules.

Such a microwave oven detects the food weight using a weight sensor, and a microwave oven using a weight sensor is disclosed in Korean Utility Model Registration No. 0118078.

The microwave oven in Korean Utility Model Registration No. 0118078 detects the food weight and controls cooking time and microwave output based on the detected food weight.

There are several types of weight sensors, such as a differential coil type weight sensor, a capacitance type weight sensor, a piezo-electric type weight sensor, a strain gage type weight sensor, and the like, and conventional weight sensors detect the food weight while the food is supported by a turntable.

EP-A-0,552,807 discloses a microwave oven comprising a heating chamber having a metal reflector provided rotatably inside a waveguide for adjusting an impedance of a load at the heating chamber side by its rotation angle. A weight sensor is used to determine whether food is placed at a centre or a peripheral edge of a turntable. In response to a determination of a weight of food and whether the food is placed in the centre or at the peripheral edge of the turntable, a rotation angle of the metal reflector is adjusted. This document forms the pre-characterising portion of the claims appended hereto.

EP-A-1, 477, 782 discloses a cooking apparatus in which a weight sensor is arranged within a cooking cavity to determine a weight of food placed upon a rotating unit within the cooking cavity.

According to the present invention there is provided an apparatus and method as set forth in the appended claims. Preferred features of the invention will be apparent from the dependent claims, and the description which follows.

The present invention provides a method for controlling the microwave output based on weight of food and food position so as to implement optimized cooking performance in a microwave oven and an apparatus for performing the same.

Since a conventional microwave oven controls the microwave output only by taking account of the food weight without taking account of the fact that food is not cooked uniformly and microwave energy transmitted to the food varies according to the position of the food on the turntable, the cooking performance of the conventional microwave oven varies depending upon whether the food is located at the center or the side of the turntable.

The present invention provides a method for precisely detecting the food position placed on a turntable using a weight sensor so as to supply a proper amount of microwave energy to the food and an apparatus for performing the same.

In one aspect, the present invention provides a control method for cooking food placed on a turntable in a microwave oven, comprising: detecting a plurality of sensing values generated according to a weight of food to be cooked during the rotation of the turntable; and detecting a food position; characterised in that: the food position is detected by comparing the detected sensing values to obtain a maximal value and a minimal value among the detected sensing values and by substituting a difference between the maximal voltage value and the minimal voltage value into a weight formula to determine a value corresponding to the position of the food upon the turntable; and controlling the microwave output based on the detected food position.

Another aspect of the present invention provides a controlling apparatus of a microwave oven for cooking food placed on a turntable, comprising: a weight sensor to detect a plurality of sensing values generated according to food weight during a rotation of the turntable; and a controller to detect the food position; characterised in that: the controller is arranged to detect food position by comparing the detected sensing values to obtain a maximal value and a minimal value among the detected sensing values and by substituting a difference between the maximal voltage value and the minimal voltage value into a weight formula to determine a value corresponding to the position of the food upon the turntable (18), and to control the microwave output based on the detected food position.

Additional aspects and/or advantages of the invention will be set forth in part in the description which follows and, in part, will be apparent from the description, or may be learned by practice of the invention.

For a better understanding of the invention, and to show how embodiments of the same may be carried into effect, reference will now be made, by way of example, to the accompanying diagrammatic drawings in which:
Figure 1 is a schematic perspective view illustrating a microwave oven including an embodiment of the present invention;
Figure 2 is a sectional view illustrating main parts of the microwave oven of Figure 1;
Figure 3 is a view illustrating a turning passage of rollers and a position of a sensor of the microwave oven according to an embodiment of the present invention;
Figure 4 is a view illustrating a contact of the rollers with the sensor during the rotation of the rollers in the cavity of the microwave oven according to an embodiment of the present invention;
Figure 5 is a block diagram illustrating the structure of a cooking control apparatus of a microwave oven according to an embodiment of the present invention;
Figure 6 is a flowchart illustrating a cooking control method of a microwave oven according to an embodiment of the present invention;
Figure 7 is a detailed flowchart illustrating a detection of the food position in the cooking control method in Figure 6; and
Figure 8 is a graph illustrating waveforms outputted from a weight sensor of the microwave oven according to an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

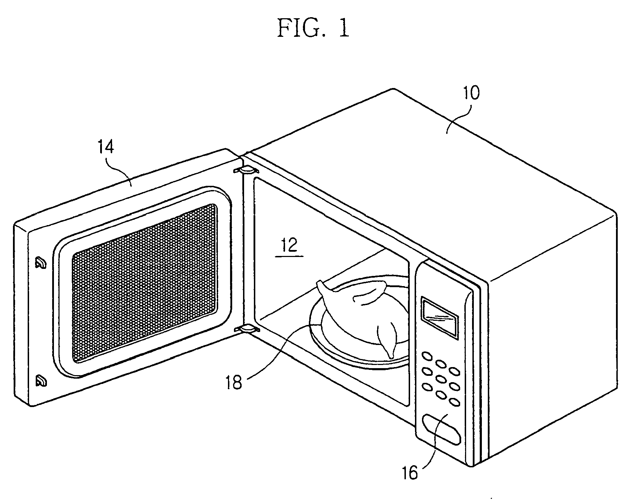

Figure 1 is a schematic perspective view illustrating a microwave oven including an embodiment of the present invention.

As shown in Figure 1, a cavity 12 is formed in a body 10, a door 14 is installed to the front side of the cavity 12 to pivot, and a manipulation panel 16 is installed to the right side of the cavity 12. When a user selects cooking function using the manipulation panel 16, the manipulation panel 16 displays the selected cooking function.

At an inner lower side of the cavity 12, a turntable 18 for rotating the food, on which food is placed, is installed.

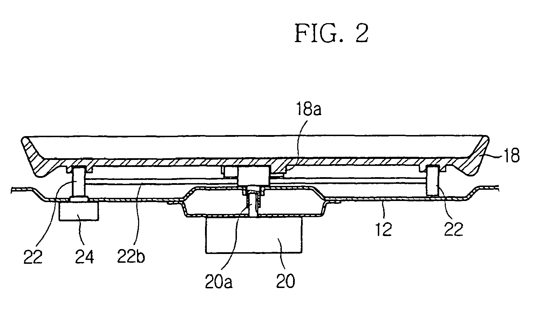

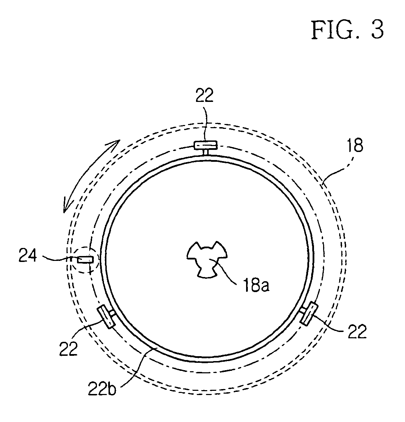

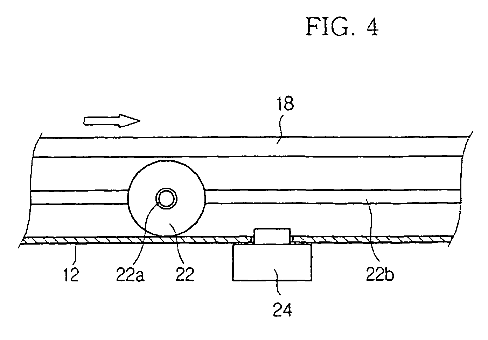

Figure 2 is a sectional view illustrating main parts of the microwave oven of Figure 1, Figure 3 is a view illustrating a turning passage of rollers and the position of a sensor of the microwave oven according to an embodiment of the present invention, and Figure 4 is a view illustrating the contact of the rollers with the sensor during the rotation of the rollers in the cavity of the microwave oven according to an embodiment of the present invention.

As shown in Figures 2 to 4, a turntable motor 20 for rotating the turntable 18 is installed at the lower side of a center shaft of the turntable 18 by a connecting shaft 20a, and a center coupler 18a, rotated on the bottom surface of the cavity 12, for supporting the turntable 18, is installed to the connecting shaft 20a.

A plurality of rollers (i.e., approximately three rollers) 22 is rotatably installed to roller supporting shafts 22a (see Figure 4) on the lower surface of the turntable 18. The rollers 22 rotate around the connecting shaft 20a during the rotation of the turntable 18, and rotate about the roller supporting shafts 22a. The rollers 22 are disposed radially every 120 degrees.

The rollers 22 travel along a rotating passage. At a lower side of the rotating passage, a weight sensor 24 penetrates the cavity 12. The weight sensor 24 generates an output signal corresponding to the food weight whenever the rollers 22 travel over the weight sensor 24 while the rollers 22 generate a rotating force turn with a roller guide 22b. The weight sensor 24 is a pressure sensor to generate voltage when a pressure corresponding to the food weight on the turntable 18 is applied thereto.

The food weight is detected by performing an algorithm for estimating the food weight, for example, by averaging three sensing values, which are generated by the three contacts of the rollers 22 for one revolution of the turntable 18 when the number of the rollers 22 is three or by using sensing values for two more revolutions of the turntable 18.

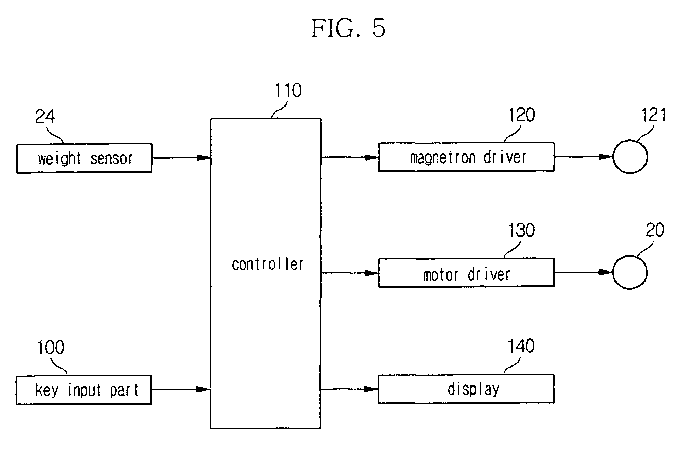

Figure 5 is a block diagram view illustrating the structure of a cooking control apparatus of a microwave oven according to an embodiment of the present invention. The cooking control apparatus includes the weight sensor 24, a key input part 100, a controller 110, a magnetron driver 120, a motor driver 130, and a display 140.

The key input part 100 is provided in the manipulation panel 16 and includes a plurality of keys (not shown) through which a user inputs cooking functions such as cooking time, menu, microwave output, start/stop, or the like, to the controller 110.

The controller 110 is a microcomputer for overall control of the microwave oven, and controls the output of the microwaves by detecting the food weight W and food position L according to the sensing values, that is, peak voltages V_{MAX1}, V_{MAX2}, and V_{MAX3} generated by the weight sensor 24, during one period (for example, when the number of rollers is three) for one revolution of the turntable 18.

The magnetron driver 120 generates microwaves according to a control signal from the controller 110 and includes a relay for controlling a magnetron 121. The motor driver 130 controls the turntable motor 20 according to the control signal from the controller 110.

The display 140 displays the cooking time, the menu, or the like selected by the user on the manipulation panel 16 according to the control signal from the controller 110.

Hereinafter, operation and effect of the cooking control apparatus of the microwave oven and the cooking control method according to an embodiment of the present invention will be described.

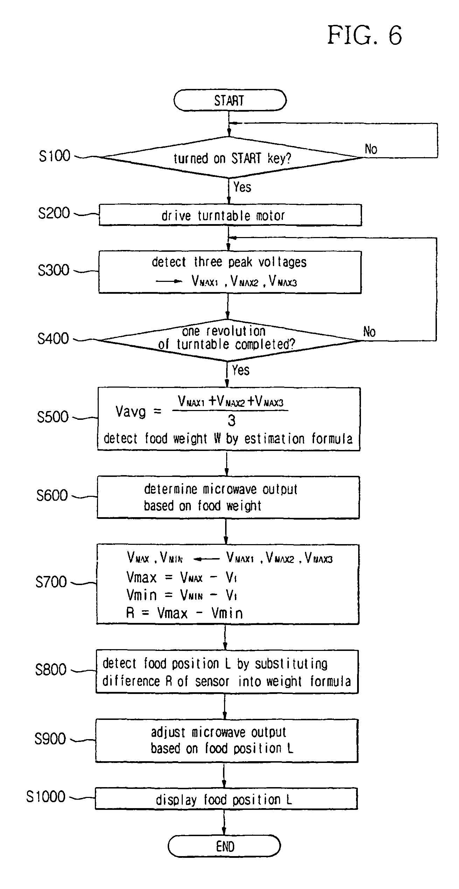

Figure 6 is a flowchart illustrating the cooking control method of the microwave oven according to an embodiment of the present invention.

In operation 100, when the user places food on the turntable 18 in the cavity 12 and presses a start key of the key input part 100, the key signal selected by the user is inputted to the controller 110 by the key input part 100.

From operation 100, the process moves to operation 200, where the controller 110 outputs a control signal for rotating the turntable 18 to the motor driver 130 so as to drive the turntable motor 20.

When the turntable motor 20 is driven, the center coupler 18a supporting the turntable 18, rotates on the bottom surface of the cavity 12 and the rollers 22, installed in the lower side of the turntable 18, rotate and travel along the passage together the roller guide 22b.

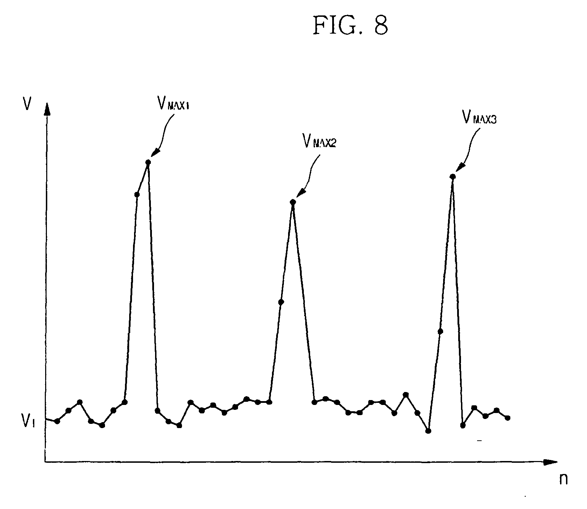

When the rollers 22 rotate with the roller guide 22b, the weight sensor 24 disposed in the bottom surface of the cavity 12 generates a voltage V when a pressure corresponding to the food weight on the turntable 18 is applied (see Figure 8).

From operation 200, the process moves to operation 300, where from respective waveforms generated during one time period, for example, when the number of the rollers is three, a maximal value VMAX1 generated from a first waveform, a maximal value VMAX2 generated from a second waveform, and a maximal value VMAX3 generated from a third waveform are detected based on the sensing values sensed by the weight sensor 24 whenever the rollers 22 travel over the weight sensor 24 (see Figure 8).

For more precise detection of the food weight, the maximal values for two more revolutions (approximately six values) can be detected. From operation 300, the process moves to operation 400, where it is determined if one revolution has been completed. However, the present invention will be described, for example, as if one revolution of the turntable 18 has been completed.

Therefore, when one revolution of the turntable 18 is completed in operation 400, the process moves to operation 500, where the controller 110 detects the food weight by estimating an average voltage value Vavg, an average value of three peak voltage values V_{MAX1}, V_{MAX2}, and V_{MAX3} generated during one revolution of the turntable 18, and from operation 500, the process moves to operation 600, where the controller 110 determines the output of the microwave based on the detected food weight W.

The output of the microwave based on the food weight W (for example, 500W, 2 minutes for 2Kg of food) is inputted in a ROM table of the controller 110. Since the food weight W is the average value of the three peak voltage values VMAX1, VMAX2, and VMAX3, and the detected food weight W is always identical regardless of the position of the food.

From operation 600, the process moves to operation 700, where the controller 110 finds a maximal value among the three peak voltage values VMAX1, VMAX2, and VMAX3, generated for one revolution of the turntable 18 and defines the found maximal value as VMAX, and finds a minimal value among the three peak voltage values VMAX1, VMAX2, and VMAX3, and defines the found minimal value as VMIN.

Further, in operation 700, an initial value V1 of the weight sensor 24 is subtracted from the defined maximal value VMAX and the defined minimal value VMIN, so as to obtain a maximal value Vmax and a minimal value Vmin of the weight sensor 24, and to estimate a difference R between the maximal value Vmax and the minimal value Vmin.

Here, the initial value V1 of the weight sensor 24 indicates an inherent initial voltage value peculiar to the weight sensor 24 and a reference value used to reduce the difference according to microwave ovens and weight sensors.

From operation 700, the process moves to operation 800, where when the estimated difference R is substituted into a formula for determining food weight, the distance from the center of the turntable 18 to food on the turntable 18, i.e., the food position L can be precisely detected, and the formula is inputted to the controller 110 in advance.

The food position on the turntable may be changed, the roller 22, near to the food position, transmits heavy food weight to the weight sensor 24, and the roller 24, far from the food position transmits light food weight to the weight sensor 24, so that the distance of the food from the center of the turntable 18 can be estimated.

From operation 800, the process moves to operation 900, where the output of the microwave is determined based on the detected food position L. When the output of the microwave (for example, the output of the microwave is adjusted to 530W and 2.5 minutes in the case that the food is positioned 60mm from the center of the turntable 18 when the food weight is 2Kg and the output of the microwave is set to 500W and 2 minutes) is inputted to the ROM table of the controller 110 in advance.

The intensity and amount of energy of the microwave in the cavity 12 are varied whenever food is positioned at the center or the edge of the turntable 18 even if food of same weight W is placed. Thus, since, cooking performance is varied even if the same microwave energy is supplied to food of the same detected food weight W, the food position L is precisely detected and optimized cooking performance is implemented.

From operation 900, the process moves to operation 1000, where the food position L is displayed on the display 140.

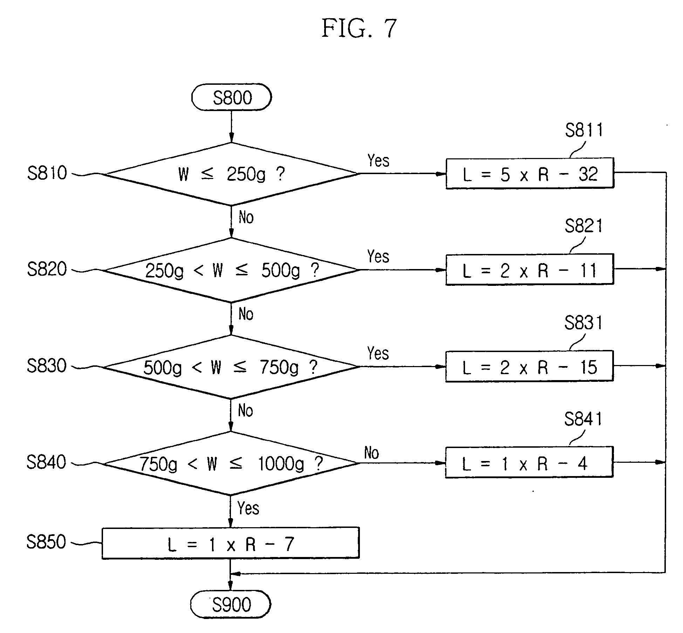

Process for detecting the food position L in the cooking control method illustrated in Figure 6 will be described in detail by referring Figure 7.

The weight and size of the turntable 18 are determined when a microwave oven is initially developed, and the food position L on the turntable 18 cannot be the same. For example, there is a possibility that, when food is placed at the edge of a turntable 18 of a large diameter, the roller 22, positioned where food is placed on the turntable, transmits a large pressure to the weight sensor 24 during the revolution of the turntable 18, but the roller 22, positioned opposite to the food position, transmits a light food weight to the weight sensor 24. Due to the difference of the diameter and the weight of the turntable 18, there may be different formulas depending upon food (for example, the food weight). In the present invention, five cases will be described by increasing the food weight in 250g increments.

In Figure 7, in operation 810, it is determined whether the food weight W is less than 250g. If it is determined in operation 810, that the food weight W is less than 250g, the process moves to operation 811, where the difference R of the sensor 24 is substituted to a weight formula (L=5×R-32) so that the distance from the center of the turntable 18 to the food position, that is, the food position L is detected.

If it is determined in operation 810, that the food weight W is not less than 250g, the process moves to operation 810, where it is determined whether the food weight W is greater than 250g and less than 500g. If it is determined in operation 820, that the food weight W is greater than 250g and less than 500g, the process moves to operation 821, where the difference R of the sensor 24 is substituted to a weight formula (L=2×R-11) so as to detect the food position L.

However, if it is determined in operation 820, that the food weight W is greater than 250g and not less than 500g, the process moves to operation 830, where it is determined whether the food weight W is greater than 500g and less than 750g is determined. If the food weight W is greater than 500g and less than 750g, the process moves to operation 831, where the difference R of the sensor 24 is substituted to a weight formula (L=2×R-15) so as to detect the food position L.

If it is determined in operation 830, that the food weight W is greater than 500g and not less than 750g, the process moves to operation 840, where it is determined whether the food weight W is greater than 750g and less than 1000g is determined. If it is determined in operation 840, that the food weight W is greater than 750g and less than 1000g, the process moves to operation 841, where the difference R of the sensor 24 is substituted to a weight formula (L=1×R-4) so as to detect the food position L.

If it is determined in operation 840, that the food weight W is greater than 750g and not less than 1000g, the process moves to operation 850, where the difference R of the sensor 24 is substituted to a weight formula (L=1×R-7) so as to detect the food position L.

Since the intensity and amount of energy of the microwave are different according to the food position, the cooking performance is changed when the same microwave energy is supplied even if the same food weight W is detected. As a result, consumers may be dissatisfied with the conventional microwave oven and manufacturers lose a chance to provide a better microwave oven.

Thus, if the microwave energy in the microwave oven is measured and programmed based on the food position when developing the microwave oven, the user can experience uniform and optimized cooking performance regardless of the food position.

Although, in the embodiment of the present invention, the detection of the food weight W and the food position L using the sensing values of the weight sensor 24 generated due to the three contacts of the weight sensor 24 for one revolution of the turntable 18 has been described as an example. The present invention is not limited to hereto and the same aspect and effect as those of the present invention can be achieved even when the food weight W and the food position L are detected using the sensing values for two revolutions or more.

Moreover, regardless of the food position, the boomerang effect that food is always positioned in front of the door 14 when the cooking is finished can be implemented by detecting the food position by the weight sensor 24.

As described above, according to the microwave oven cooking control method and the apparatus for performing the same according to the present invention, optimized cooking performance can be implemented by controlling the microwave output based on the food weight and the food position, and microwaves of proper energy can be supplied to food based on the food position by precisely detecting the food position on the turntable using the weight sensor.

Although a few preferred embodiments have been shown and described, it will be appreciated by those skilled in the art that various changes and modifications might be made without departing from the scope of the invention, as defined in the appended claims.

## Claims

1. A control method for cooking food placed on a turntable (18) in a microwave oven, comprising:
detecting a plurality of sensing values (300) generated according to a weight of food to be cooked during the rotation of the turntable (18); and
detecting a food position (800);
**characterised in that**:
the food position (800) is detected by comparing the detected sensing values to obtain a maximal value and a minimal value among the detected sensing values and by substituting a difference between the maximal voltage value and the minimal voltage value into a weight formula to determine a value corresponding to the position of the food upon the turntable (18); and
controlling the microwave output (900) based on the detected food position.

2. The control method according to claim 1, wherein the maximal value is a maximal voltage value obtained by subtracting an initial voltage value from a greatest value among the sensing values.

3. The control method according to claim 1 or 2, wherein the minimal value is a minimal voltage value obtained by subtracting an initial voltage value from a lowest value among the sensing values.

4. The control method according to claim 1, 2 or 3, further comprising:
detecting the weight of food (500) based on the detected sensing values; and
detecting the food position by classifying the detected weight of food.

5. The control method according to claim 4, wherein the food weight is a value corresponding to an average of the sensing values and is detected as a same value regardless of the food position.

6. The control method according to any of claims 1 to 5, wherein the food position is a distance of the food from a center of the turntable (18).

7. The control method according to claim 5, wherein the output of the microwave is increased as the food position is farther from the center of the turntable (18).

8. The control method according to any preceding claim, wherein the sensing values are peak voltage values detected according to a pressure applied corresponding to the weight of food.

9. The control method according to claim 8, wherein the sensing values are peak voltage values detected for a period of one revolution of the turntable (18).

10. The control method according to claim 8, wherein the sensing values are peak voltage values detected for a period of at least two revolutions of the turntable (18).

11. The control method according to any preceding claim, wherein the weight formula is predetermined.

12. A controlling apparatus of a microwave oven for cooking food placed on a turntable (18), comprising:
a weight sensor (24) to detect a plurality of sensing values generated according to food weight during a rotation of the turntable (18); and
a controller (110) to detect the food position;
**characterised in that**:
the controller (110) is arranged to detect food position by comparing the detected sensing values to obtain a maximal value and a minimal value among the detected sensing values and by substituting a difference between the maximal voltage value and the minimal voltage value into a weight formula to determine a value corresponding to the position of the food upon the turntable (18), and to control the microwave output based on the detected food position.

13. The controlling apparatus according to claim 12, wherein the sensing values are peak voltage values detected when a plurality of rollers (22) that are installed in a lower side of the turntable (18) travels over the weight sensor (24), according to a pressure applied corresponding to the weight of food.

14. The controlling apparatus according to claim 13, wherein the controller (110) controls the microwave output intensity and microwave output time based on the food position.

15. The controlling apparatus according to claim 13 or 14, wherein a number of the rollers (22) is three, each roller disposed radially every 120 degrees.

## Patentansprüche

1. Steuerverfahren zum Garen von Lebensmitteln, welche auf einem Drehtisch (18) in einem Mikrowellenofen platziert sind, mit:
Erfassung einer Vielzahl von Abtastwerten (300), welche gemäß einem Gewicht des Lebensmittels, welches während der Drehung auf dem Drehtisch (18) gegart werden soll, generiert werden; und
Erfassung einer Lebensmittelposition (800);
**dadurch gekennzeichnet, dass**:
die Lebensmittelposition (800) durch Vergleich der erfassten Abtastwerte ermittelt wird, um einen maximalen Wert und einen minimalen Wert unter den erfassten Abtastwerten zu erhalten und durch Ersetzen einer Differenz zwischen dem maximalen Spannungswert und dem minimalen Spannungswert in eine Gewichtsformel, um einen Wert zu bestimmen, der der Position des Lebensmittels auf dem Drehtisch (18) entspricht; und
Steuerung der Mikrowellenausgabe (900), basierend auf der ermittelten Lebensmittelposition.

2. Steuerverfahren nach Anspruch 1, wobei der Maximalwert ein maximaler Spannungswert ist, welcher durch Subtraktion eines Anfangsspannungswertes von einem größten Wert unter den Abtastwerten erhalten wird.

3. Steuerverfahren nach Anspruch 1 oder 2, wobei der Minimalwert ein minimaler Spannungswert ist, welcher durch Subtraktion eines Anfangsspannungswertes von einem niedrigsten Wert unter den Abtastwerten erhalten wird.

4. Steuerverfahren nach Anspruch 1, 2 oder 3, ferner mit:
Erfassung des Gewichts des Lebensmittels (500) basierend auf den erfassten Abtastwerten; und
Erfassung der Lebensmittelposition durch Klassifizierung des erfassten Gewichts des Lebensmittels.

5. Steuerverfahren nach Anspruch 4, wobei das Lebensmittelgewicht ein Wert ist, welcher einem Durchschnittswert der Abtastwerte entspricht und unabhängig von der Lebensmittelposition, als ein gleicher Wert erfasst wird.

6. Steuerverfahren nach einem der Ansprüche 1 bis 5, wobei die Lebensmittelposition ein Abstand des Lebensmittels von einem Zentrum des Drehtisches (18) ist.

7. Steuerverfahren nach Anspruch 5, wobei die Ausgabe der Mikrowelle erhöht wird, wenn die Lebensmittelposition vom Zentrum des Drehtisches (18) weiter entfernt liegt.

8. Steuerverfahren nach einem der vorangehenden Ansprüche, wobei die Abtastwerte Spitzenspannungswerte sind, welche gemäß einem Druck, der entsprechend dem Gewicht des Lebensmittels angelegt wird, erfasst werden.

9. Steuerverfahren nach Anspruch 8, wobei die Abtastwerte Spitzenspannungswerte sind, welche für die Dauer einer Umdrehung des Drehtisches (18) erfasst werden.

10. Steuerverfahren nach Anspruch 8, wobei die Abtastwerte Spitzenspannungswerte sind, welche für die Dauer von mindestens zwei Umdrehungen des Drehtisches (18) erfasst werden.

11. Steuerverfahren nach einem der vorangehenden Ansprüche, wobei die Gewichtsformel vorgegeben ist.

12. Steuergerät eines Mikrowellenofens zum Garen von Lebensmitteln, welche auf einem Drehtisch (18) platziert sind, mit:
einem Gewichtssensor (24) zur Erfassung einer Vielzahl von Abtastwerten, welche gemäß dem Lebensmittelgewicht während einer Umdrehung des Drehtisches (18) erzeugt werden; und
einer Steuerung (110) zur Erfassung der Lebensmittelposition;
**dadurch gekennzeichnet, dass**:
die Steuerung (110) eingerichtet ist, um die Lebensmittelposition durch Vergleich der erfassten Abtastwerte zu ermitteln, um einen maximalen Wert und einen minimalen Wert unter den erfassten Abtastwerten zu erhalten und durch Ersetzen einer Differenz zwischen dem maximalen Spannungswert und dem minimalen Spannungswert in eine Gewichtsformel, um einen Wert zu bestimmen, welcher der Position des Lebensmittels auf dem Drehtisch (18) entspricht, und um die Mikrowellenausgabe, basierend auf der ermittelten Lebensmittelposition, zu regeln.

13. Steuergerät nach Anspruch 12, wobei die Abtastwerte Spitzenspannungswerte sind, welche erfasst werden, wenn eine Vielzahl von Rollen (22), die in einer unteren Seite des Drehtisches (18) installiert sind, gemäß einem Druck, welcher entsprechend dem Gewicht des Lebensmittels angelegt wird, über den Gewichtssensor (24) wandert.

14. Steuergerät nach Anspruch 13, wobei die Steuerung (110), basierend auf der Lebensmittelposition, die Mikrowellenausgabeintensität und die Mikrowellenausgabezeit regelt.

15. Steuergerät nach Anspruch 13 oder 14, wobei eine Anzahl der Rollen (22) drei ist, und jede Rolle radial alle 120 Grad angeordnet ist.

## Revendications

1. Procédé de commande pour cuire des aliments placés sur un plateau tournant (18) dans un four à micro-ondes, comprenant :
la détection d'une pluralité de valeurs de détection (300) générées selon un poids d'aliments à cuire durant la rotation du plateau tournant (18) ; et
détection d'une position des aliments (800) ;
**caractérisé en ce que** :
la position des aliments (800) est détectée en comparant les valeurs de détection détectées, pour obtenir une valeur maximale et une valeur minimale parmi les différentes valeurs de détection détectées, et en substituant une différence entre la valeur de tension maximale et la valeur de tension minimale en une formule de poids pour déterminer une valeur correspondant à la position des aliments sur le plateau tournant (18) ; et
la commande de la fourniture de micro-ondes (900) se fait d'après la position détectée des aliments.

2. Procédé de commande selon la revendication 1, dans lequel la valeur maximale est une valeur de tension maximale obtenue en soustrayant une valeur de tension initiale d'une valeur maximale parmi les valeurs de détection.

3. Procédé de commande selon la revendication 1 ou 2, dans lequel la valeur minimale est une valeur de tension minimale obtenue en soustrayant une valeur de tension initiale d'une valeur la plus basse parmi les valeurs de détection.

4. Procédé de commande selon la revendication 1, 2 ou 3, comprenant en outre :
la détection du poids des aliments (500) d'après les valeurs de détection détectées ; et
détection de la position des éléments par classement du poids détecté des aliments.

5. Procédé de commande selon la revendication 4, dans lequel le poids des aliments est une valeur correspondant à une moyenne des valeurs de détection et est détecté en tant que même valeur, indépendamment de la position des aliments.

6. Procédé de commande selon l'une quelconque des revendications 1 à 5, dans lequel la position des aliments est une distance des aliments par rapport à un centre du plateau tournant (18).

7. Procédé de commande selon la revendication 5, dans lequel la fourniture de micro-onde est augmentée lorsque la position des aliments est plus écartée du centre du plateau tournant (18).

8. Procédé de commande selon l'une quelconque des revendications précédentes, dans lequel les valeurs de détection sont des valeurs de tension de crête, détectées selon une pression appliquée de façon correspondante au poids des aliments.

9. Procédé de commande selon la revendication 8, dans lequel les valeurs de détection sont des valeurs de tension de crête, détectées pendant une période d'un tour de rotation du plateau tournant (18).

10. Procédé de commande selon la revendication 8, dans lequel les valeurs de détection sont des valeurs de tension de crête, détectées pour une période d'au moins deux tours de rotation du plateau tournant (18).

11. Procédé de commande selon l'une quelconque des revendications précédentes, dans lequel la formule de poids est prédéterminée.

12. Dispositif de commande d'un four à micro-ondes pour cuire des aliments placés sur un plateau tournant (18), comprenant :
un capteur de poids (24), pour détecter une pluralité de valeurs de détection générées selon le poids d'aliment durant une rotation du plateau tournant (18) ; et
un contrôleur (110), pour détecter la position des aliments ;
**caractérisé en ce que**
le contrôleur (110) est agencé pour détecter la position des aliments en comparant les valeurs de détection détectées pour obtenir une valeur maximale et une valeur minimale parmi les valeurs de détection détectées, et en substituant une différence entre la valeur de tension maximale et la valeur de tension minimale en une formule de poids, afin de déterminer une valeur correspondant à la position des aliments sur le plateau tournant (18), et pour commander la fourniture de micro-onde d'après la position détectée des aliments.

13. Dispositif de commande selon la revendication 12, dans lequel les valeurs de détection sont des valeurs de tension de crête détectées lorsqu'une pluralité de galets (22), installés sur une face inférieure du plateau tournant (18), se déplacent sur le capteur de poids (24), de manière correspondante à une pression appliquée correspondant au poids des aliments.

14. Dispositif de commande selon la revendication 13, dans lequel le contrôleur (110) commande l'intensité de la fourniture des micro-ondes et le temps de fourniture des micro-ondes, d'après la position des aliments.

15. Dispositif de commande selon la revendication 13 ou 14, dans lequel une pluralité de galets (22) est au nombre de trois, chaque galet étant disposé radialement à chaque angle de 120 degrés.
